Europäisches Patentamt

European Patent Office

Office européen des brevets

(11) Numéro de publication : **0 483 019 B1**

# (12) FASCICULE DE BREVET EUROPEEN

(45) Date de publication du fascicule du brevet :
06.09.95 Bulletin 95/36

(51) Int. Cl.$^6$ : **G01F 23/28**

(21) Numéro de dépôt : **91402884.0**

(22) Date de dépôt : **28.10.91**

(54) **Procédé et dispositif de mesure du niveau de liquide.**

(30) Priorité : **26.10.90 FR 9013303**

(43) Date de publication de la demande :
**29.04.92 Bulletin 92/18**

(45) Mention de la délivrance du brevet :
**06.09.95 Bulletin 95/36**

(84) Etats contractants désignés :
**DE GB IT**

(56) Documents cités :
**DE-A- 2 920 199
FR-A- 2 628 836
MEASUREMENT TECHNIQUES vol. 31, no. 5,
Mai 1988, NEW YORK US pages 462 - 464
,XP50462 BELOTSERKOVSKII 'Fiber-optic
liquid level meter'
SOVIET JOURNAL OF INSTRUMENTATION
AND CONTROL vol. 11, Novembre 1968,
OXFORD GB pages 50 - 51 KRAVTSOV 'Level
sensors based on total internal reflection'**

(73) Titulaire : **INTERTECHNIQUE
61 Rue P. Curie
ZI les Gâtines
BP No. 1
F-78370 Plaisir (FR)**

(72) Inventeur : **Vauge, Christian
14, rue des Meuniers
F-75012 Paris (FR)**
Inventeur : **Bouttes, Jacques
6, rue du Général Camou
F-75007 Paris (FR)**

(74) Mandataire : **Fort, Jacques
CABINET PLASSERAUD
84, rue d'Amsterdam
F-75009 Paris (FR)**

EP 0 483 019 B1

**Description**

La présente invention a pour objet un procédé de mesure du niveau d'un liquide contenu dans un réservoir et elle trouve une application particulièrement importante, bien que non exclusive, dans le jaugeage des carburants, notamment sur les avions.

Les capteurs de la plupart des jaugeurs utilisés à l'heure actuelle sont constitués par des condensateurs placés dans les réservoirs et immergés plus ou moins profondément dans le carburant suivant le niveau de ce dernier. Cette méthode de mesure conduit à mettre sous tension des éléments contenus dans le réservoir, en contact avec un liquide inflammable ou explosif. Les liaisons entre ces capteurs et l'extérieur peuvent être sensibles aux perturbations électromagnétiques.

On a par ailleurs déjà proposé dans le document Measurement Techniques, Vol. 31, n° 5, Mai 1988, pp. 462-464, Plenum Publishing Corp., N.Y., E.N. Belotserkovskii, un procédé optique de mesure du niveau de la surface libre d'un liquide contenu dans un réservoir conforme au préambule de la revendication 1. L'atténuation du flux lumineux dans le tronçon demandé est représentative du niveau. La mesure est peu fiable du fait notamment du manque de stabilité des composants de fourniture et de détection de lumière et la réponse n'est pas linéaire.

L'invention vise à fournir un procédé et un dispositif de mesure optique, permettant de mesurer le niveau de la surface libre avec une précision acceptable dans la pratique et ce en ne mettant en oeuvre que des moyens simples et commercialement disponibles.

Dans ce but l'invention propose notamment un procédé de mesure selon la revendication 1.

La comparaison des deux atténuations peut être directe, c'est-à-dire effectuée sur les rapports entre flux sortants et flux entrants dans chaque fibre ; elle peut se ramener dans la mesure où les flux entrants dans les deux fibres restent toujours dans un même rapport bien déterminé, à une comparaison entre les flux sortants.

L'utilisation d'une fibre de référence permet de s'affranchir des variations d'indice du liquide, par exemple en fonction de la température.

La variation de l'atténuation subie par la lumière en fonction de la hauteur d'immersion n'est pas linéaire. Le défaut de linéarité peut être compensé par une correction effectuée à l'aide d'une courbe d'étalonnage mémorisée. Aussi longtemps que le tronçon dénudé est de longueur réduite, la correction à effectuer reste faible. Cette correction peut en particulier être effectuée à l'aide d'un processeur numérique.

Une solution plus avantageuse lorsqu'on recherche une dynamique de mesure importante consiste à utiliser plusieurs fibres optiques ayant des tronçons dénudés, décalés verticalement (avec ou sans recouvrement des tranches verticales correspondant aux tronçons dénudés) la mesure s'effectuant alors par identification de la fibre dont le tronçon dénudé est partiellement immergé, puis détermination de la fraction immergée par le procédé défini ci-dessus.

Si par exemple on utilise dix fibres dont les parties dénudées sont de longueur égale et sont placées dans des tranches directement adjacentes et sans recouvrement, une précision de mesure de 10 % sur chaque fibre suffit pour obtenir une précision de 1 % sur la mesure globale de niveau.

L'invention propose également un dispositif de mesure optique du niveau d'un liquide dans un réservoir conforme à la revendication 3 ou 7, ou l'une des revendications qui s'y rattachent.

Dans le cas fréquent où le dispositif est destiné à mesurer le niveau d'un carburant tel que le kérosène, dont l'indice à la température ambiante est d'environ 1,44, une fibre optique disponible, commerciale, à âme de silice, d'indice légèrement supérieur à celui du kérosène, donne des résultats satisfaisants. On peut en particulier utiliser des fibres optiques ayant un diamètre de coeur de 600 μm et une épaisseur de gaine optique de 200 μm, qui ont permis d'obtenir des résultats satisfaisants avec des tronçons dénudés de 40 mm de long.

Dans une variante de réalisation de l'invention, les fibres de mesures présentent non pas un, mais plusieurs tronçons dénudés, non directement adjacents, ce qui permet de multiplier le nombre de plages de mesure et donc la précision, pour un nombre de fibres déterminé. Il est simplement nécessaire de limiter la longueur dénudée à une valeur qui ne conduit en aucun cas à une atténuation réduisant de façon inadmissible la précision. Dans la pratique, les fibres n'auront jamais plus de trois parties dénudées.

Du fait de la non linéarité de l'atténuation, la relation entre variation de l'atténuation et variation de la hauteur sera différente pour les différents tronçons dénudés d'une même fibre. L'identification du tronçon et l'application de la relation de proportionnalité peut être faite par un processeur numérique.

L'invention sera mieux comprise à la lecture de la description qui suit de modes particuliers de réalisation. La description se réfère aux dessins qui l'accompagne, dans lesquels :

- la figure 1 est un schéma de principe destiné à montrer les composants principaux d'un dispositif de mesure selon l'invention ;
- la figure 2 est une courbe représentative de l'atténuation $a$ dans une fibre en fonction de la hauteur de liquide $h$ ;
- la figure 3 est une courbe représentative du coefficient de transmission $c$ dans une fibre ayant un tronçon dénudé plongé dans un fluide, en fonction de l'indice de ce fluide ;
- la figure 4, similaire à la figure 1, montre un dispositif utilisable pour le jaugeage du carburant dans un réservoir ;

- la figure 5 montre une disposition possible de fibres ayant chacune deux tronçons dénudés ;
- la figure 6 montre un montage permettant de soustraire l'âme d'une fibre, dans une partie dénudée, à l'action d'un liquide polluant;
- la figure 7 montre une variante de réalisation.

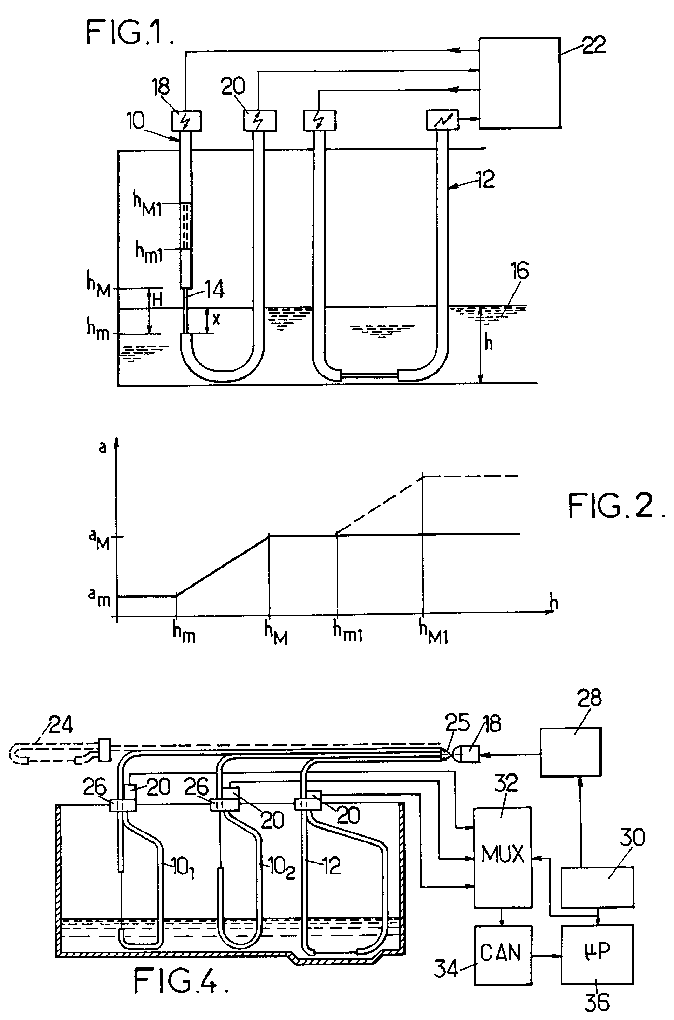

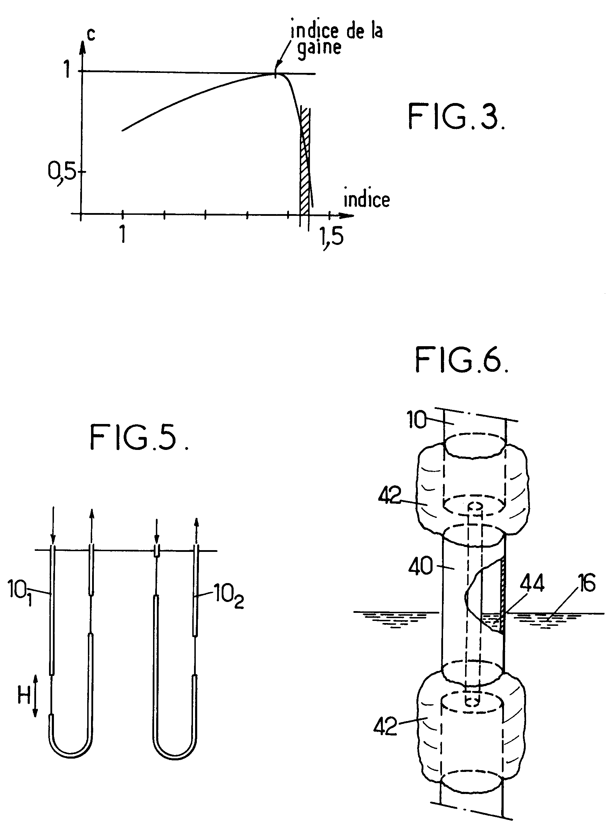

Le dispositif dont la constitution de principe est montrée en figure 1 utilise les propriétés de transmission de la lumière dans une fibre optique dont un tronçon de quelques centimètres a été partiellement ou complètement débarrassé de sa gaine optique, dont l'indice est plus faible que celui de l'âme.

Le dispositif montré en figure 1 comporte une fibre de mesure unique 10 et une fibre de référence 12. Ces fibres sont de type identique. La fibre est choisie de façon que l'indice du liquide 16 dont le niveau est à mesurer soit inférieur à celui de l'âme 14 de la fibre et nettement supérieur à l'indice de la gaine optique de la fibre. Des moyens permettent d'envoyer un flux lumineux à une extrémité de la fibre et de recueillir à l'autre extrémité le flux sortant et de fournir un signal représentatif de ce flux sortant. Dans le cas schématisé sur la figure 1, l'une des extrémités de la fibre 10 est couplée à un émetteur optique 18, qui sera généralement une diode électroluminescente, et l'autre extrémité est couplée à un capteur opto-électronique 20, qui sera par exemple un phototransistor muni d'un amplificateur. Le flux lumineux émis par la source 18 peut souvent être représenté par le signal de commande appliqué à la source. Un circuit électronique 22 permet de commander la source et de calculer l'atténuation subie par le flux lumineux.

Dans une fibre équipée de sa gaine, la lumière est transmise pratiquement sans atténuation. Au contraire la lumière transmise dans une fibre 10 ayant un tronçon dénudé est fonction de la hauteur immergée $x$. Lorsque ces hauteurs varient, l'atténuation $a$ change d'une valeur minimum $a_m$ pratiquement nulle à une valeur $a_M$, puis elle reste constante lorsque le niveau du liquide augmente encore, comme le montre la courbe en traits pleins sur la figure 2. Dans la pratique la variation de l'atténuation $a$ en fonction de $h$ n'est pas complètement linéaire mais elle peut être déterminée expérimentalement et mémorisée. De plus, une loi linéaire représente une approximation suffisante lorsque la hauteur totale de la partie dénudée reste faible.

L'atténuation subie par la lumière dépend également dans une large mesure de l'indice du liquide 16. Comme le montre la figure 3, le coefficient de transmission de la lumière, à profondeur d'immersion donnée du tronçon dénudé, diminue lorsque l'indice augmente en restant compris entre l'indice de la gaine et l'indice du coeur. Pour le kérosène par exemple, la variation d'indice en fonction de la température peut faire varier le coefficient de transmission dans toute la zone indiquée par des hachures sur la figure 3.

En conséquence, il sera nécessaire de tenir compte de la température dans la mesure, chaque fois que cette température est susceptible de varier dans un domaine important. La compensation de la variation d'indice peut être effectuée de façon simple en utilisant la mesure effectuée dans la fibre de référence 12.

La détermination de la hauteur $x$ est encore facilitée si on dispose d'une autre fibre encore de référence, du même type que les fibres 10 et 12, ayant la même longueur de tronçon dénudé, placée de façon que ce tronçon dénudé soit en permanence dans l'air. Dans ce cas l'atténuation dans la fibre 12 de référence est égale à $a_M$ tandis que l'atténuation dans l'autre fibre de référence est égale à $a_m$. Dans la mesure où la variation de l'atténuation est linéaire, la hauteur $x$ peut être déterminée, pour l'atténuation $a$, par la formule :

$$x (a = [H(a - a_m)] / (a_M - a_m).$$

Cette formule peut être remplacée par une formule d'interpolation parabolique ou en cosinus, de type connu. Dans un dispositif comportant plusieurs fibres de mesure, chaque fibre optique peut avoir plusieurs tronçons non jointifs dénudés, comme cela est représenté par exemple en tirets sur la figure 1 : la courbe de variation de l'atténuation en fonction du niveau de l'eau a alors, pour une fibre, l'allure représentée sur la figure 2.

La figure 4 montre très schématiquement, à titre d'exemple, deux fibres de mesure $10_1$ et $10_2$ ayant chacune deux tronçons dénudés, chacun des quatre tronçons correspondant à une tranche de hauteur H, adjacente à la tranche luisante.

Le dispositif montré en figure 4 comporte deux fibres de mesure $10_1$ et $10_2$, seulement une fibre de référence 12 et éventuellement une autre fibre de référence 24 dont le tronçon dénudé est à l'extérieur du liquide et situé dans le gaz surmontant le liquide. Dans le cas représenté, une même source 18 illumine les entrées de toutes les fibres, par l'intermédiaire d'un système optique 25 prévu pour donner un éclairement homogène de toutes les tranches. Par l'intermédiaire de connecteurs 26, qui peuvent être rassemblés en un seul, les fibres de mesure et de référence proprement dites sont reliées aux fibres de transport de lumière, qui permettent de placer les parties électrique et électronique du dispositif à une distance importante, pouvant atteindre plusieurs mètres, du réservoir. Les capteurs de lumière 20 associés chacun à une fibre peuvent être portés par les connecteurs.

On peut notamment utiliser, comme source de lumière, une diode électroluminescente ou une diode laser founissant une lumière monochromatique. On peut en particulier utiliser des diodes électroluminescentes de type courant émettant dans le rouge. La source de lumière 18 est excitée par un générateur de signal électrique 28, éventuellement avec une modulation d'amplitude permettant une détection synchrone, sous la commande d'une base de temps 30.

Les récepteurs de lumière 20 peuvent être des photodiodes ou des phototransistors, formés par des éléments discrets ou regroupés sous forme d'une matrice linéaire ou à deux dimensions. Les signaux électriques de sortie des capteurs 20 sont appliqués, dans le mode de réalisation montré en figure 4, à un multiplexeur 32 commandé par la base de temps 30. Chaque signal fourni par un capteur 20 de fibre de mesure à son tour est comparé aux signaux fournis par les capteurs des fibres de référence 12 et 24 par un organe de calcul. Dans le cas montré sur la figure 4, les signaux de sortie du multiplexeur 32 sont mis sous forme numérique par un convertisseur analogique-numérique 34 et traités par un microprocesseur 36 qui effectue les comparaisons.

Le microprocesseur peut également, à partir des informations qu'il reçoit, fournir des indications autres que de niveau, portant par exemple sur les caractéristiques du liquide (masse volumique, température) et du gaz contenu dans le réservoir. Il peut également vérifier la cohérence des informations et ainsi détecter les pannes.

La séquence des opérations effectuées sous la commande de la base de temps peut être la suivante :

- mesure de $a_m$ et $a_M$ pour les deux fibres d'étalonnage 24 et 12 ;
- détermination d'une courbe d'étalonnage entre les valeurs $a_m$ et $a_M$, par exemple suivant la loi linéaire définie plus haut ;
- mémorisation d'une courbe d'étalonnage complète pour l'ensemble des fibres de mesure $10_1$ et $10_2$ c'est-à-dire déterminaton de $\underline{h}$ en fonction de l'atténuation dans les deux fibres ;
- interrogation des fibres de mesure suivant un ordre prédéterminé et mémorisé, par exemple dans l'ordre 12, $10_1$, $10_2$, 24 et détermination de celles des fibres qui ont un tronçon dénudé partiellement immergé, par comparaison avec les atténuations mémorisées ;
- calcul de $\underline{x}$ pour la fibre concernée, par interpolation, et détermination de la valeur corrélative de $\underline{h}$ ;
- affichage de $\underline{h}$ si le résultat est cohérent avec des valeurs antérieures et sinon mise en route d'une procédure de recherche d'erreur.

On peut considérer que $\underline{h}$ est représenté par un nombre comportant une partie de poids élevé, identifiant la fibre servant à la mesure, et une partie de poids faible, résultat de l'interpolation sur une partie dénudée. La détermination de la fibre concernée a un caractère numérique dès la mesure. l'interpolation s'effectue par passage d'analogique en numérique : suivant les caractéristiques recherchées pour un codeur déterminé, on peut accentuer son caractère de codeur numérique ou de mesureur analogique en multipliant ou en réduisant le nombre des tronçons.

Les composants 18,28,32,34 et 36 peuvent évidemment être regroupés dans un boîtier placé à distance du réservoir. Les capteurs peuvent eux-mêmes être incorporés à ce boîtier et dans ce cas la liaison avec les fibres de mesure et de référence proprement dites s'effectuent par des sections de fibres normales et des connecteurs.

Dans certains cas, on peut craindre une perturbation des mesures par une contamination provoquée par des impuretés contenues dans le liquide à jauger. Cette difficulté peut être écartée en utilisant un liquide intermédiaire, contenu dans un espace déformable entourant le tronçon dénudé, suffisamment souple pour que le liquide contenu dans cet espace soit au même niveau que le liquide extérieur. La figure 6 montre, à titre d'exemple, une fibre 10 dont le tronçon dénudé est contenu dans un espace isolé du liquide 16 par une paroi déformable ayant un élément tubulaire rigide 40 et deux membranes 42 reliant de façon étanche l'élément 40 à la gaine. L'espace contient un liquide de transfert 44 dont la densité et l'indice doivent être aussi voisins que possible de ceux du liquide 16 à jauger. A condition d'utiliser des éléments déformables 42 n'ayant qu'une rigidité négligeable, la perturbation apportée aux mesures est tout à fait tolérable. La constante de temps de mesure est légèrement allongée, mais cela ne présente pas d'inconvénient majeur.

A titre d'exemple, on peut indiquer que, pour un tronçon dénudé de 70 mm de longueur et une fibre optique ayant un diamètre d'âme de 0,6 mm et un diamètre de gaine de 2 mm, le volume de l'espace est de 2 à 3 $cm^3$. Il est évidemment variable puisque le liquide intermédiaire 44 est contenu dans la partie souple inférieure 42 lorsque le niveau de liquide à jauger est inférieur à la base du tronçon dénudé. Lorsque le niveau du liquide 16 monte, le liquide intermédiaire 44 monte dans l'élément rigide, à un niveau égal à celui du liquide 16 si les densités des deux liquides sont égales.

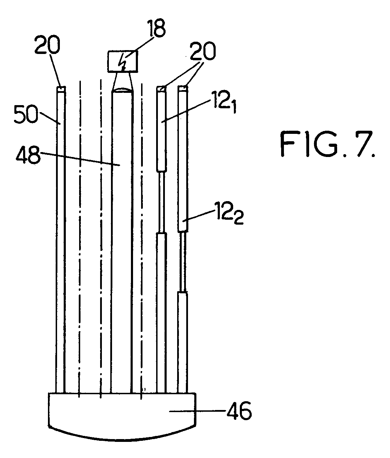

Pour éviter d'avoir à courber les fibres, on peut encore utiliser le mode de réalisation montré en figure 7, dans lequel les fibres $10_1$, $10_2$,... sont groupées sous la forme d'un faisceau vertical plongé dans le liquide 16, pouvant constituer une canne de jaugeage. Les extrémités inférieures de toutes les fibres sont couplées optiquement à un bloc 46 de matière luminescente dont l'émission lumineuse est spontanée ou provoquée. Par exemple, l'émission lumineuse peut être provoquée par phosphorescence, luminescence ou diffusion due à un rayonnement lumineux intense amené de l'extérieur par un guide diélectrique d'ondes optiques central 48. On peut également utiliser une émission par chimioluminescence ou radioluminescence. Le faisceau peut incorporer une ou des fibres de référence et notamment une fibre 50 gainée complètement permettant la mesure des variations du flux lumineux d'entrée.

## Revendications

1. Procédé de mesure optique du niveau d'un liquide dans un réservoir suivant lequel on envoie un flux lumineux connu dans une extrémité d'une fibre optique de mesure (10) ayant un tronçon dénudé, sensiblement rectiligne, occupant une hauteur déterminée dans le domaine de variation du niveau à mesurer et on mesure le flux lumineux sortant de la fibre optique de mesure, caractérisé en ce que : on envoie également un flux connu dans une fibre de référence (12) de même nature que la fibre de mesure, ayant une partie dénudée sensiblement rectiligne qui est maintenue en permanence immergée dans le liquide, les fibres étant choisies de façon que les indices de leur coeur et de leur gaine encadrent l'indice du liquide ; on mesure également le flux lumineux sortant de la fibre optique de référence et on compare l'atténuation subie par la lumière dans ladite fibre de mesure à l'atténuation dans ladite fibre de référence ; et on déduit la fraction de la hauteur dénudée de la fibre de mesure qui est immergée d'une comparaison entre les atténuations.

2. Procédé selon la revendication 1, caractérisé en ce qu'on utilise plusieurs fibres de mesure $(10_1, 10_2)$ ayant des tronçons dénudés décalés verticalement, avec ou sans recouvrement dans le sens vertical.

3. Dispositif de mesure optique du niveau d'un liquide dans un réservoir, comprenant au moins une fibre optique de mesure (10) ayant un tronçon sensiblement rectiligne, dénudé, s'étendant sur une hauteur prédéterminée de mesure, caractérisé en ce qu'il comprend également une fibre optique de référence ayant un tronçon sensiblement rectiligne dénudé destiné à plonger en permanence dans le liquide ; des moyens d'envoi de flux lumineux dans les deux fibres ; et des moyens pour mesurer le flux lumineux sortant des fibres et déduire de leur comparaison la fraction immergée du tronçon de la fibre optique de mesure.

4. Dispositif selon la revendication 3, comportant plusieurs fibres de mesure, caractérisé en ce que chacune des fibres de mesure $(10_1, 10_2)$ comprend plusieurs tronçons dénudés, non directement adjacents, les tronçons dénudés des différentes fibres étant échelonnés pour permettre une mesure en plusieurs plages adjacentes, deux plages successives correspondant à des fibres différentes.

5. Dispositif selon la revendication 3 ou 4, caractérisé en ce qu'il comprend, en plus de la fibre de référence ayant un tronçon dénudé immergé en permanence dans le liquide, une seconde fibre de référence ayant un tronçon dénudé émergé en permanence et en contact avec le même gaz que celui qui occupe le réservoir au-dessus du liquide.

6. Dispositif selon la revendication 5, caractérisé en ce qu'il comprend des capteurs opto-électroniques associés chacun à la sortie d'une fibre et des moyens de multiplexage (32) permettant de mesurer en séquence les flux sortants des différentes fibres.

7. Dispositif de mesure optique du niveau d'un liquide dans un réservoir, caractérisé en ce qu'il comprend plusieurs fibres optiques de mesure $(10_1, 10_2)$ ayant chacune un tronçon sensiblement rectiligne, dénudé, les tronçons dénudés étant à des niveaux différents ; des moyens d'envoi de flux lumineux dans les fibres ; et des moyens de mesure et de calcul pour, dans une première étape, identifier celle des fibres de mesure $(10_1, 10_2)$ dont le tronçon dénudé est partiellement immergé et, dans une seconde étape, mesurer le flux lumineux sortant des fibres $(10_1, 10_2)$ et en déduire la fraction immergée du tronçon de la fibre optique de mesure.

8. Dispositif selon l'une quelconque des revendications 3 à 7, caractérisé en ce que chaque tronçon dénudé est contenu dans un volume délimité par une paroi déformable de séparation avec le liquide et est occupé par un volume de liquide ayant des propriétés physiques comparables à celles du liquide dont le niveau est à mesurer, de façon que la surface libre du liquide dans le volume soit à la même hauteur que le niveau libre du liquide dont le niveau est à mesurer.

9. Dispositif selon l'une quelconque des revendications 3 à 8, caractérisé en ce que le tronçon ou chaque tronçon dénudé est suffisamment court pour que la variation d'atténuation en fonction de la profondeur d'immersion soit sensiblement linéaire.

10. Dispositif selon l'une quelconque des revendications 3 à 9, caractérisé en ce que l'indice du liquide à mesurer est inférieur à l'indice du coeur de la fibre et nettement supérieur à l'indice de la gaine optique de la fibre.

## Patentansprüche

1. Verfahren zur optischen Messung des Flüssigkeitsstands einer Flüssigkeit in einem Behälter, bei welchem man einen bekannten Lichtstrom in ein Ende einer optischen Meßfaser (10) schickt, die einen abgemantelten, im wesentlichen geradlinigen Abschnitt aufweist, der im Bereich der Änderung des zu messenden Flüssigkeitsstands eine bestimmte Höhe einnimmt, und man den aus der optischen Meßfaser austretenden Lichtstrom mißt, **dadurch gekennzeichnet**, daß man ferner einen bekannten Strom in eine Referenzfaser (12) schickt, die von der gleichen Art wie die Meßfaser ist, einen im wesentlichen geradlinigen, abgemantelten Abschnitt aufweist, der permanent in die Flüssigkeit eingetaucht bleibt, wobei die Fasern derart gewählt sind, daß die Indizes ihrer Kerne und ihrer Mäntel den Index der Flüssigkeit zwischen sich einschließen; daß man ferner den aus der optischen Referenzfaser austretenden Lichtstrom mißt und die von dem Licht in der Meßfaser erlittene Schwächung mit der Schwächung in der Referenzfaser vergleicht; und daß man den eingetauchten Bruchteil der abgemantelten Höhe der Meßfaser aus einem Vergleich zwischen den Schwächungen herleitet.

2. Verfahren nach Anspruch 1, **dadurch gekennzeichnet**, daß man mehrere Meßfasern ($10_1$, $10_2$) verwendet, welche abgemantelte, mit oder ohne Überlappung in vertikaler Richtung gegeneinander vertikal versetzte Abschnitte aufweisen.

3. Vorrichtung zur optischen Messung des Flüssigkeitsstands einer Flüssigkeit in einem Behälter, umfassend wenigstens eine optische Meßfaser (10) mit einem im wesentlichen geradlinigen, abgemantelten Abschnitt, der sich über eine vorbestimmte Meßhöhe erstreckt, **dadurch gekennzeichnet**, daß sie ferner umfaßt:

    eine optische Referenzfaser, welche einen im wesentlichen geradlinigen, abgemantelten Abschnitt aufweist, der dazu bestimmt ist, permanent in die Flüssigkeit eingetaucht zu sein;

    Mittel, um einen Lichtstrom in die beiden Fasern zu schicken; und

    Mittel zum Messen des aus den Fasern austretenden Lichtstroms und zum Herleiten des eingetauchten Bruchteils des Abschnitts der optischen Meßfaser aus deren Vergleich.

4. Vorrichtung nach Anspruch 3 mit mehreren Meßfasern, **dadurch gekennzeichnet**, daß jede der Meßfasern ($10_1$, $10_2$) mehrere abgemantelte, nicht unmittelbar benachbarte Abschnitte umfaßt, wobei die abgemantelten Abschnitte der verschiedenen Fasern geeicht sind, um eine Messung an mehreren benachbarten Bereichen zu ermöglichen, wobei zwei aufeinanderfolgende Bereiche verschiedenen Fasern entsprechen.

5. Vorrichtung nach Anspruch 3 oder 4, **dadurch gekennzeichnet**, daß sie zusätzlich zu der Referenzfaser mit einem permanent in die Flüssigkeit eingetauchten abgemantelten Abschnitt eine zweite Referenzfaser umfaßt, die einen abgemantelten Abschnitt aufweist, der nie eingetaucht ist und mit dem gleichen Gas in Kontakt steht, wie jenes, das sich oberhalb der Flüssigkeit in dem Behälter befindet.

6. Vorrichtung nach Anspruch 5, **dadurch gekennzeichnet**, daß sie optoelektronische Aufnehmer umfaßt, welche jeweils dem Ausgang einer Faser zugeordnet sind, sowie Multiplexermittel (32), welche die aufeinanderfolgende Messung der austretenden Ströme der verschiedenen Fasern ermöglichen.

7. Vorrichtung zum optischen Messen des Flüssigkeitsstands einer Flüssigkeit in einem Behälter, **dadurch gekennzeichnet**, daß sie umfaßt:

    mehrere optische Meßfasern ($10_1$, $10_2$), die jeweils einen im wesentlichen geradlinigen, abgemantelten Abschnitt aufweisen, wobei die abgemantelten Abschnitte sich auf verschiedenen Höhen befinden;

    Mittel, um einen Lichtstrom in die Fasern zu schicken; und

    Mittel zum Messen und Rechnen, um in einem ersten Schritt jene der Meßfasern ($10_1$, $10_2$) zu identifizieren, deren abgemantelter Abschnitt teilweise eingetaucht ist, und in einem zweiten Schritt den Lichtstrom zu messen, der aus den Fasern ($10_1$, $10_2$) austritt, und hieraus den eingetauchten Bruchteil des Abschnitts der optischen Meßfaser herzuleiten.

8. Vorrichtung nach einem der Ansprüche 3 bis 7, **dadurch gekennzeichnet**, daß jeder abgemantelte Abschnitt in einem Volumen enthalten ist, das von einer verformbaren Trennwandung zu der Flüssigkeit begrenzt ist und von einem Volumen einer Flüssigkeit eingenommen ist, die physikalische Eigenschaften aufweist, welche jenen der Flüssigkeit, deren Flüssigkeitsstand zu messen ist, vergleichbar sind, so daß die freie Oberfläche der Flüssigkeit in dem Volumen sich auf gleicher Höhe wie der freie Stand der Flüssigkeit befindet, deren Flüssigkeitsstand zu messen ist.

9. Vorrichtung nach einem der Ansprüche 3 bis 8, **dadurch gekennzeichnet**, daß der abgemantelte Abschnitt oder jeder abgemantelte Abschnitt ausreichend kurz ist, damit die Änderung der Schwächung als Funktion der Eintauchtiefe im wesentlichen linear ist.

10. Vorrichtung nach einem der Ansprüche 3 bis 9,

**dadurch gekennzeichnet**, daß der Index der zu messenden Flüssigkeit kleiner ist als der Index des Kerns der Faser und deutlich größer als der Index des optischen Mantels der Faser.

## Claims

1. A method of optical measurement of the level of a liquid in a tank, in which a known light flux is introduced into one end of an optical measuring fibre (10) having a substantially straight stripped portion occupying a given height within the range of variation of the level to be measured, and the light flux coming out of the optical measuring fibre is measured, characterised in that a known flux is also introduced into a reference fibre (12) of the same nature as the measuring fibre and having a substantially straight stripped part permanently kept immersed in the liquid, the fibres being chosen so that the index of the liquid is between the indices of their core and of their sheath; the light flux leaving the optical reference fibre is also measured and the attenuation undergone by the light in the measuring fibre is compared with the attenuation in the reference fibre; and the immersed fraction of the stripped height of the measuring fibre is deduced from a comparison between the attenuations.

2. A method according to claim 1, characterised by use of a number of measuring fibres ($10_1$, $10_2$) having vertically offset stripped portions, with or without overlapping in the vertical direction.

3. A device for optical measurement of the level of a liquid in a tank, comprising at least one optical measuring filter (10) having a substantially straight stripped portion and extending over a predetermined measuring height, the device being characterised in that it also comprises a reference optical fibre having a substantially straight stripped portion for permanently immersing in the liquid; means for introducing light flux into the two fibres; and means for measuring the light flux leaving the fibres and comparing them so as to deduce the immersed fraction of the portion of the optical measuring fibre.

4. A device according to claim 3, comprising a number of measuring fibres, characterised in that each measuring fibre ($10_1$, $10_2$) comprises a number of not directly adjacent stripped portions, the stripped portions of the various fibres being staggered to obtain a measurement in a number of adjacent ranges, each pair of successive ranges corresponding to different fibres.

5. A device according to claim 3 or 4, characterised in that in addition to the reference fibre comprising a stripped portion permanently immersed in the liquid, it comprises a second reference fibre having a stripped portion permanently outside the liquid and in contact with the same gas as that occupying the tank above the liquid.

6. A device according to claim 5, characterised in that it comprises opto-electronic sensors each associated with the outlet of a fibre, and multiplexing means (32) for sequentially measuring the fluxes emerging from the various fibres.

7. A device for optical measurement of the level of a liquid in a reservoir, characterised in that it comprises a number of optical measuring fibres ($10_1$, $10_2$) each having a substantially rectilinear stripped portion, the stripped portions being at different levels; means for introducing light flux into the fibres; and measurement and calculating means which, in a first stage, identify that one of the measuring fibres ($10_1$, $10_2$) whose stripped portion is partially immersed and, in a second step, measure the light flux coming from the fibres ($10_1$, $10_2$) and use it to deduce that fraction of the portion of the optical measuring fibre which is immersed.

8. A device according to any of claims 3 to 7, characterised in that each stripped portion is contained in a volume bounded by a deformable partition wall and the liquid and is occupied by a volume of liquid having physical properties comparable with those of the liquid whose level is to be measured, so that the exposed surface of the liquid in the volume is at the same height as the exposed level of the liquid whose level is to be measured.

9. A device according to any of claims 3 to 8, characterised in that the or each stripped portion is sufficiently short for the variation of attenuation in dependence on depth of immersion to be substantially linear.

10. A device according to any of claims 3 to 9, characterised in that the index of the liquid for measuring is lower than the index of the core of the fibre and considerably greater than the index of the optical sheath of the fibre.

FIG.1.

FIG.2.

FIG.4.

FIG.3.

FIG.6.

FIG.5.

FIG.7.